# FASCICULE DE BREVET EUROPEEN

(11) **EP 3 643 409 B1**
(45) Date de publication et mention de la délivrance du brevet: **15.12.2021**
(21) Numéro de dépôt: 19204774.4
(22) Date de dépôt: 23.10.2019
(51) Int. Cl.: B05B 13/04, B05B 12/00, B05B 12/04, B05B 12/12, B41J 3/407, B25J 11/00

(54) **PROCÉDÉ D'APPLICATION D'UN PRODUIT DE REVÊTEMENT SUIVANT LA TECHNOLOGIE DE GOUTTE À LA DEMANDE ET ROBOT APPLICATEUR POUR LA MISE EN OEUVRE DU PROCÉDÉ**
BESCHICHTUNGSVERFAHREN NACH DER DROP-ON-DEMAND-TECHNOLOGIE, UND APPLIKATIONSROBOTER FÜR DIE UMSETZUNG DIESES VERFAHRENS
METHOD FOR APPLYING A COATING PRODUCT ACCORDING TO DROP ON DEMAND TECHNOLOGY AND APPLICATION ROBOT FOR IMPLEMENTING SUCH METHOD

(30) Priorité: 24.10.2018 FR 1859829
(43) Date de publication de la demande: 29.04.2020
(73) Titulaire: Exel Industries, 51200 Epernay (FR)
(72) Inventeur: LE STRAT, Cédric, 75009 Paris (FR)
(74) Mandataire: Lavoix

(56) Documents cités:
- WO-A1-2013/139326
- WO-A1-2018/108565
- FR-A1- 3 048 368

## Description

La présente invention concerne un procédé d'application d'un produit de revêtement suivant la technologie de goutte à la demande, ainsi qu'un robot applicateur pour la mise en oeuvre du procédé.

La technologie de goutte à la demande (ou DOD en Anglais pour "Drop On Demand") consiste à déposer un produit de revêtement sous formes de gouttes, ce qui présente l'avantage de déposer uniquement la quantité de produit nécessaire au revêtement de la surface.

Actuellement, lorsqu'on souhaite revêtir une surface, par exemple avec de la peinture, on délimite d'abord les contours de la surface. Avec un dispositif applicateur muni d'au moins une buse, on effectue en pratique plusieurs passages dans le même sens, par exemple dans le sens de la longueur de la pièce, mais de façon décalée pour couvrir toute la largeur de la surface à revêtir. Autrement dit, on applique des bandes jointives les unes aux autres. Un tel procédé est par exemple connu de la publication FR 3 048 368 A1, dont le contenu est incorporé ici par référence.

Lors du déplacement de l'applicateur, la fréquence à laquelle les gouttes sont déposées les unes après les autres est réglée par rapport à la vitesse de déplacement de façon à déposer les gouttes de manière jointive, et donc former ce qu'on appelle un train de gouttes. Ainsi, la distance entre deux gouttes successives, ou distance « inter-gouttes », laquelle est mesurée de centre à centre, est égale ou inférieure au diamètre d'une goutte déposée. Autrement formulée, il peut y avoir du recouvrement entre deux gouttes successives.

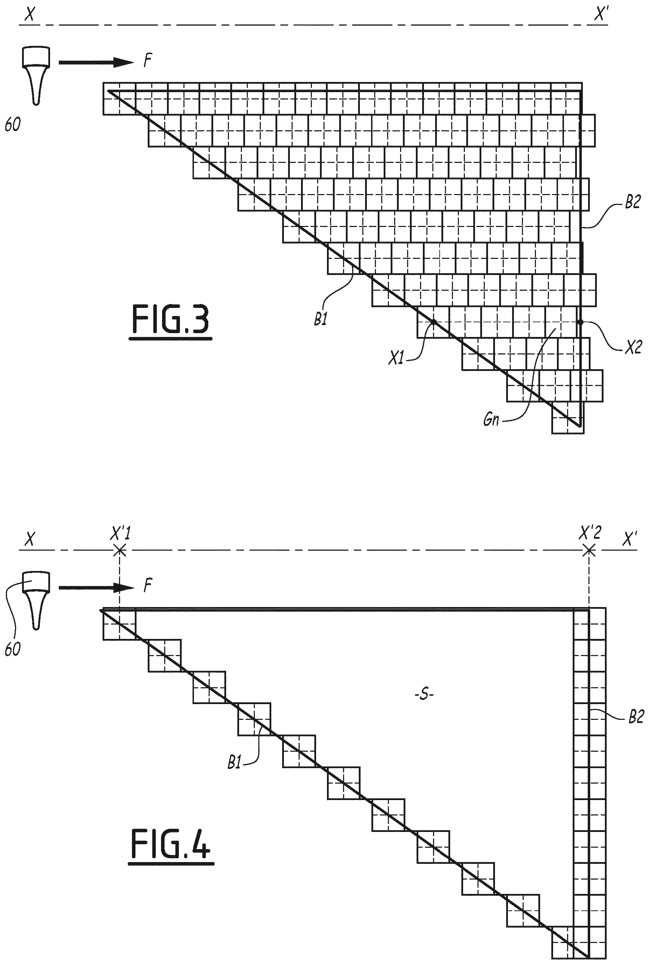

Le problème avec ce type de procédé est que lorsque la largeur de la surface à peindre n'est pas un multiple de la distance inter-gouttes, alors il est impossible d'obtenir un bord franc si les bandes (jointives) n'ont pas toutes la même longueur. Aussi, il peut arriver que certaines parties de la surface restent à nu, c'est-à-dire ne sont pas recouvertes de peinture (ou autre). Typiquement, la figure 3, qui représente le résultat que l'on peut obtenir avec un procédé de l'art antérieur, montre qu'il est impossible d'obtenir un bord franc pour une surface triangulaire par exemple. En effet, dans ce cas, les trains de gouttes ne s'arrêtent jamais au même endroit, c'est-à-dire que la dernière goutte des trains de gouttes n'est jamais positionnée à la même place sur l'axe de déplacement de la buse, ce qui donne un bord complètement irrégulier, alors qu'il devrait être droit.

C'est à ces inconvénients qu'entend plus particulièrement remédier l'invention en proposant un nouveau procédé d'application de peinture (toujours suivant la technologie de goutte à la demande), grâce auquel on peut obtenir un bord franc (dans le sens de la largeur) même pour les pièces de largeur variable et grâce auquel on est certain de couvrir toute la surface définie.

A cet effet l'invention concerne un procédé d'application d'un produit de revêtement, en particulier de peinture, suivant la technologie de goutte à la demande, dans lequel le produit de revêtement est déposé par un robot applicateur comprenant un contrôleur et au moins une buse à ouverture séquentielle, commandée par le contrôleur. Le procédé comprend des étapes consistant à :
a) calculer dans un repère les coordonnées de plusieurs points situés sur le contour d'une surface à revêtir;
b) transmettre les coordonnées des points calculées à l'étape a) au contrôleur du robot (68); et
c) déplacer la buse du robot applicateur entre un point de départ et un point d'arrivée, dont les projections, selon l'axe d'éjection de la buse, sur la surface à revêtir
définissent respectivement un premier point de repère et un deuxième point de repère appartenant respectivement à deux bords de la surface à revêtir, afin de déposer un train de gouttes entre les deux bords.

Conformément à l'invention, à l'étape c), l'espacement entre les centres respectifs de deux gouttes successives du train de gouttes est ajustée par le contrôleur en fonction de la longueur du chemin entre les deux points de repère et de façon à ce que la dernière goutte du train de gouttes est déposée de manière centrée sur le deuxième point de repère.

Grâce à l'invention, on maitrise précisément la position de la dernière goutte déposée par la buse sur son trajet. En particulier, le procédé selon l'invention permet de déposer la dernière goutte de façon centrée sur un point de repère. Un avantage indéniable de l'invention est donc qu'il est possible de peindre une surface avec un bord parfaitement droit, et ce même si la largeur de la surface à peindre, mesurée parallèlement à un axe de déplacement de la buse, varie dans le sens de la longueur et/ou ne correspond pas à un multiple de la distance inter-gouttes.

Selon des aspects avantageux, mais non obligatoires de l'invention, un tel procédé peut comporter une ou plusieurs des caractéristiques suivantes, prises dans toute combinaison techniquement admissible :
- Lesdites deux gouttes successives sont les deux premières gouttes ou les deux dernières gouttes du train de gouttes et donc l'espacement entre les centres respectifs de deux gouttes successives du train de gouttes n'est pas le même sur toute la longueur du train de gouttes.
- Alternativement, lesdites deux gouttes successives ne sont pas les deux premières gouttes ou les deux dernières gouttes du train de gouttes.
- A l'étape c), on ajuste l'espacement entre les centres respectifs de plusieurs paires de deux gouttes successives du train de gouttes et dans lequel lesdites paires de deux gouttes successives sont espacées à intervalle régulier les unes des autres.
- Au moins deux gouttes successives du train de gouttes sont espacées d'une largeur, mesurée de centre à centre et parallèlement à la courbure dudit chemin, qui est par défaut inférieure ou égale à la largeur d'une goutte une fois étalée.
- A l'étape c), on ajuste l'espacement entre les centres respectifs de chaque paire de deux gouttes successives du train de gouttes et donc l'espacement entre les centres respectifs de deux gouttes successives du train de gouttes est sensiblement le même sur toute la longueur du train de gouttes.
- L'espacement entre les centres respectifs des deux gouttes successives est ajusté en modifiant la fréquence d'ouverture de la buse ou la vitesse de la buse lors de son déplacement à l'étape c).
- L'espacement entre les centres respectifs des deux gouttes successives est ajusté en modifiant en temps réel la fréquence d'ouverture de la buse selon la vitesse et/ou la position effective de la buse.
- La première goutte du train de gouttes est centrée sur le premier point de repère.
- L'ouverture et la fermeture de chaque buse sont commandées électroniquement par des électrovalves.
- L'ouverture et la fermeture de chaque buse sont commandées électroniquement par des actionneurs piézo-électriques.
- Le robot comprend plusieurs buses et l'ouverture et la fermeture de chaque buse sont commandées électroniquement de façon indépendante pour chaque buse, de sorte que chaque buse peut avoir une fréquence d'éjection différente.
- Le chemin entre les deux points de repère présente en tout point un rayon de courbure identique à celui de la trajectoire de la buse entre le point de départ et le point d'arrivée.
- La buse est orientée de telle façon que l'axe de projection de la buse reste sensiblement perpendiculaire à la surface à revêtir sur la totalité du déplacement entre le point de départ et le point d'arrivée.

L'invention concerne également un robot applicateur d'un produit de revêtement, en particulier de peinture, comprenant un contrôleur et au moins une buse à ouverture séquentielle, commandée par le contrôleur, le robot étant configuré pour mettre en œuvre les étapes du procédé défini précédemment. Enfin, l'invention concerne une installation comprenant un ou plusieurs robots de ce type.

L'invention et d'autres avantages de celle-ci sera mieux comprise à la lumière de la description qui va suivre de plusieurs modes de réalisation du procédé selon l'invention, donnée uniquement à titre d'exemple et faite en référence aux dessins annexés dans lesquels :
- La figure 1 est une vue schématique d'un robot applicateur de peinture capable de mettre en œuvre un procédé selon l'invention ;
- La figure 2 est une vue à plus grande échelle, toujours schématique, d'un dispositif applicateur de peinture monté à l'extrémité d'un bras de robot ;
- La figure 3 est une vue schématique illustrant un exemple du recouvrement qu'on obtient, pour une surface donnée, avec un procédé de l'art antérieur ;
- La figure 4 est une vue comparable à celle de la figure 3, mais en suivant le procédé de l'invention ;
- La figure 5 est une vue simplifiée d'un train de gouttes déposé conformément à un premier mode de réalisation du procédé selon l'invention ;
- La figure 6 est une vue simplifiée d'un train de gouttes déposé conformément à un deuxième mode de réalisation du procédé selon l'invention ;
- La figure 7 est une vue simplifiée d'un train de gouttes déposé conformément à un troisième mode de réalisation du procédé selon l'invention ;
- La figure 8 est une vue simplifiée illustrant la mise en oeuvre du procédé lorsque la surface à revêtir est incurvée, précisément bombée ; et
- La figure 9 est une vue simplifiée et en élévation, illustrant la mise en œuvre du procédé lorsque la surface à revêtir est gauche.

Sur les figures 3 à 7, les gouttes déposées sont représentées par des carrés et non par des cercles pour des raisons de simplification.

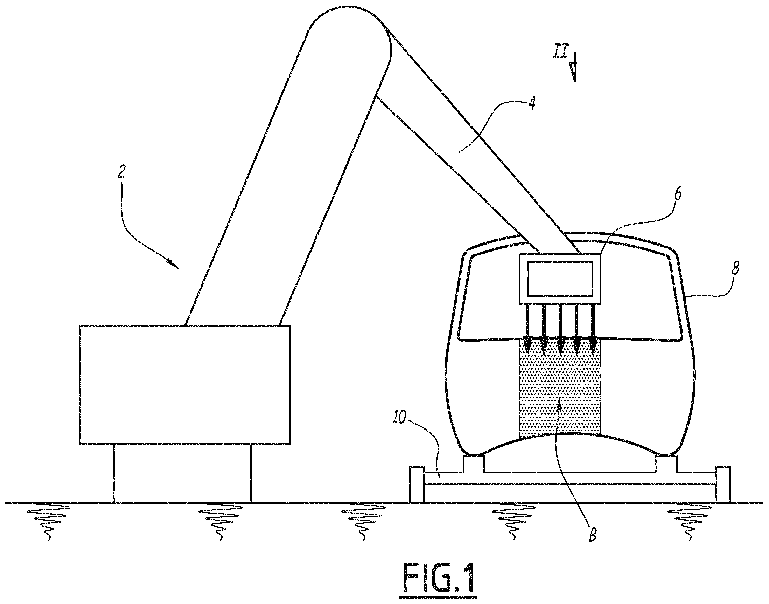

Sur la figure 1 est représenté un robot multiaxes 2 comprenant un bras mobile 4 à l'extrémité duquel est monté un applicateur de produit de revêtement 6. Dans le domaine considéré, à savoir celui du revêtement, on parle d'un robot applicateur.

En pratique, ce robot fait partie d'une installation (non représentée) comportant un ou plusieurs robots de ce type. Par exemple, l'installation peut comprendre un premier groupe de robots pour appliquer un apprêt, un deuxième groupe de robots pour appliquer une couche de peinture et un troisième groupe de robots pour appliquer un vernis de protection.

De préférence, le produit de revêtement considéré est de la peinture, mais il peut également s'agir d'un apprêt, d'une encre ou encore d'un vernis.

Pour l'exemple, le robot multiaxes 2 est représenté à la figure 1 sur le côté d'un convoyeur 10 déplaçant des carrosseries 8 de véhicule automobile. Aussi, le robot multiaxes 2 applique une bande de peinture B sur la surface du capot de chaque carrosserie 8 déplacée par le convoyeur 10.

Dans le cas d'une installation comprenant plusieurs robots, les robots sont en pratique disposés à la suite les uns des autres le long du convoyeur et/ou de part et d'autre du convoyeur 10 transportant les pièces à revêtir, telles que les carrosseries automobiles 8.

L'applicateur de produit de revêtement 6 comprend au moins une buse d'éjection de gouttes de peinture.

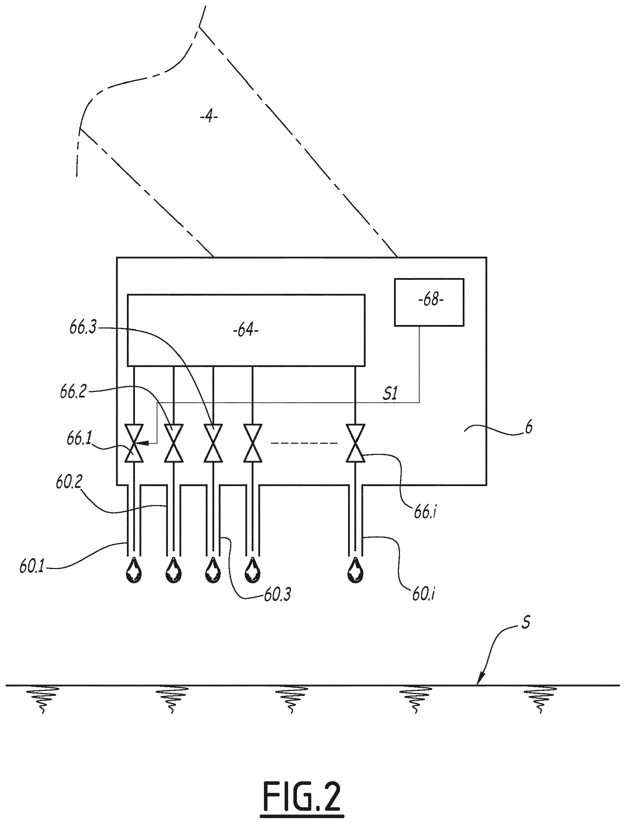

Dans l'exemple, l'applicateur de produit de revêtement 6 comprend une rangée de buses, référencées 60.1 à 60.i sur la figure 2, i étant le nombre de buses de la rangée, qui est par exemple compris entre 10 et 100.

Ici, les buses 60.1 à 60.i de la rangée sont disposées de manière perpendiculaire à la direction de déplacement de l'applicateur 6 lors de l'application du produit de revêtement. Néanmoins, en variante, le procédé pourrait très bien être mis en œuvre avec un applicateur dont les buses ne seraient pas alignées ou du moins pas dans une direction perpendiculaire à la direction de déplacement.

Chaque buse est configurée pour déposer le produit de revêtement goutte par goutte. Il s'agit de la technologie de goutte à la demande, ou DOD pour « Drop On Demand » en Anglais.

Une fois déposée, une goutte s'étale sur la surface à revêtir. On définit un coefficient d'étalement comme le rapport entre l'aire de la surface revêtue une fois la goutte étalée et le diamètre de la goutte. Ce coefficient d'étalement dépend notamment du type de produit de revêtement utilisé. Il est compris entre 5 et 10, souvent de l'ordre de 7.

Dans l'exemple, chaque goutte présente, une fois étalée, une forme ronde. Toutefois, pour d'autres teintes, on pourrait aussi avoir des gouttes qui, une fois étalées, prennent une forme de rectangle, d'ellipse ou autre. Cela dépend notamment de la viscosité du produit de revêtement, des valeurs de tension de surface, etc.

Avantageusement, les buses 60.1 à 60.i sont des trous pratiqués dans une plaque, la largeur des gouttes correspondant alors à la largeur des trous.

Dans le mode de réalisation des figures, l'applicateur 6 comprend une vanne pour chaque buse de la rangée. Les vannes sont respectivement référencées 66.1 à 66.i. Chaque vanne est reliée à un réservoir 64 de produit de revêtement, qui est commun à toutes les vannes lorsque l'applicateur comporte, comme dans le mode de réalisation des figures, plusieurs buses.

Ici, chaque vanne est une vanne électromagnétique (ou vanne solénoïde). Les vannes électromagnétiques sont bien connues en soi, c'est pourquoi elles ne sont pas décrites plus avant. Le principe est que la vanne comprend un organe de fermeture, du type clapet, en matériau ferromagnétique, qui réagit donc lorsqu'on applique un champ magnétique. Ainsi, il est possible de déplacer le clapet simplement en alimentant une bobine.

En variante, d'autres types de vanne pourront évidemment être utilisés. On pense notamment à des vannes piézoélectriques, à des vannes commandées avec un signal d'excitation différent, du type thermique, acoustique ou encore pneumatique.

Ici, le réservoir 64 est en surpression par rapport à la pression atmosphérique, de façon que le produit est automatiquement éjecté lorsqu'on ouvre une vanne.

De préférence, l'applicateur 6 comprend en outre un contrôleur, ou unité électronique de commande 68. Le contrôleur 68 contrôle l'ouverture et la fermeture de chaque vanne, et donc la fréquence d'ouverture de chaque vanne. On parle de buses à ouverture (ou fermeture) séquentielle. Aussi, la fréquence d'ouverture d'une vanne correspond à la fréquence à laquelle les gouttes sont éjectées de la buse, c'est-à-dire à la fréquence d'éjection de la buse.

Avantageusement, et dans le cas où le robot applicateur comprend plusieurs buses, l'ouverture et la fermeture de chaque buse sont commandées électroniquement de façon indépendante pour chaque buse, de sorte que chaque buse peut avoir une fréquence d'éjection différente.

Typiquement, le contrôleur 68 envoie à chaque vanne un signal de commande, tel que le signal électrique S1 envoyé à la vanne 66.1. En fonction du signal reçu, la vanne s'ouvre ou se ferme par actionnement du solénoïde.

Aussi, le robot 2 comprend de préférence un autre organe de contrôle (non représenté) pour contrôler les mouvements du bras 4 de manière à effectuer une trajectoire de consigne. Avantageusement, les fonctions de contrôle de trajectoire et de contrôle de la ou des vannes sont mutualisées, c'est-à-dire traitées par un même organe de contrôle, à savoir le contrôleur 68.

On décrit ci-après comment le produit de revêtement est déposé sur une surface à revêtir, c'est-à-dire les étapes du procédé d'application. Comme il apparaîtra ci-après, le robot 2 est configuré pour mettre en œuvre le procédé d'application. En particulier, le contrôleur 68 est programmé pour commander la mise en œuvre du procédé d'application par l'applicateur 6.

Lors d'une première étape a), on calcule dans un repère les coordonnées de plusieurs points situés sur le contour d'une surface à peindre S. Typiquement, les coordonnées des points situés sur le contour de la surface à peindre S peuvent être calculées et/ou enregistrées au préalable dans un fichier informatique.

Connaissant l'enveloppe en 3D de la pièce à revêtir, ainsi que les limites de chaque zone à traiter, on en déduit les coordonnées des points situés sur le contour de la surface à peindre.

La trajectoire du robot est définie, en général par programmation hors ligne, puis transmise informatiquement au contrôleur du robot. La longueur développée de chaque trajectoire à l'impact est transmise au contrôleur des buses.

Indifféremment, le procédé peut être mis en œuvre quelle que soit la nature de la trajectoire du robot, c'est-à-dire que la trajectoire peut être selon une dimension (droite), deux dimensions (trajectoire curviligne contenue dans un plan) ou trois dimensions.

Ensuite, et lors d'une deuxième étape b), les coordonnées des points calculées à l'étape a) sont transmises (informatiquement) au contrôleur du robot. Dans l'exemple où ces coordonnées sont enregistrées dans un fichier, on transmettra tout simplement le fichier au contrôleur 68 par voie informatique.

Une fois ces étapes préalables terminées, on peut commencer l'application de la peinture (ou tout autre produit de revêtement) sur la surface à revêtir S. Dans l'exemple de la figure 4, la surface S est plane et de forme triangulaire, précisément en forme de triangle rectangle. On définit un axe X-X' comme l'axe de déplacement de l'applicateur de produit de revêtement 6. L'applicateur 6 est donc, dans l'exemple, déplacé en translation suivant l'axe de déplacement X-X'.

Aussi, on considère ici que l'applicateur 6 comprend une seule buse 60, et va donc effectuer plusieurs passages dans le sens X-X', pour couvrir l'intégralité de l'aire de la surface S. Précisément, dans l'exemple de la figure 4, l'applicateur va être déplacé 11 fois dans le sens de l'axe X-X'. Evidemment, un applicateur équipé de 11 buses ou plus pourra couvrir toute la surface S en un seul passage.

On définit un premier bord B1 de la surface S correspondant ici à l'hypoténuse et un deuxième bord B2 opposé au bord B1 dans le sens de l'axe X-X'.

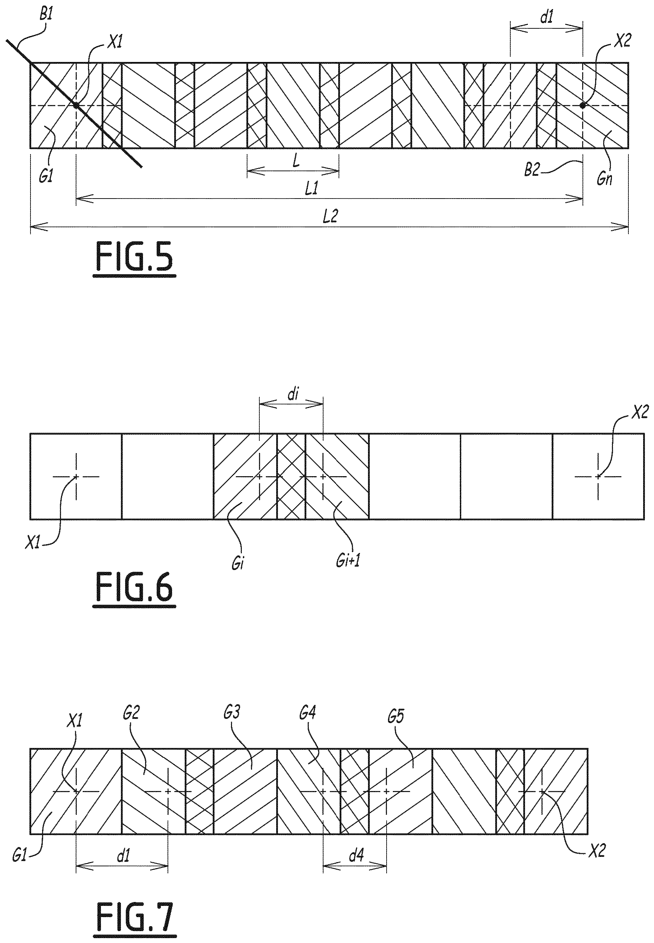

En référence aux figures 4 et 5, et lors d'une étape ultérieure c), la buse 60 du robot applicateur est déplacée entre un point de départ et un point d'arrivée, dont les projections selon l'axe d'éjection de la buse définissent un premier point de repère et un deuxième point de repère appartenant (ou intersectant) respectivement à deux bords B1 et B2 de la surface à peindre.

L'axe d'éjection de la buse est l'axe selon lequel les gouttes sont éjectées de la buse.

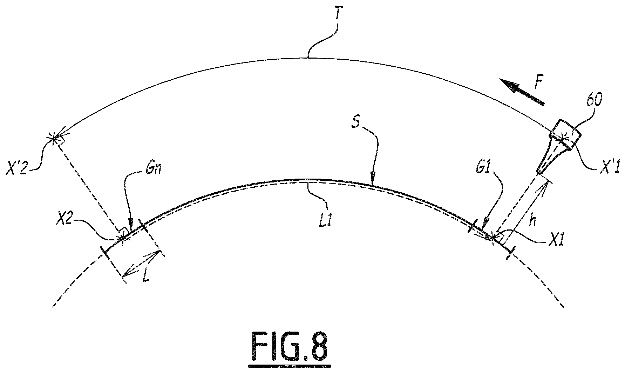

Aussi, la trajectoire de la buse est visible à la figure 8 uniquement et référencée avec la lettre T et le sens de déplacement de la buse est représenté par la flèche F sur les figures.

Accessoirement, dans l'exemple, la buse est orientée de telle façon que l'axe de projection de la buse reste sensiblement perpendiculaire à la surface S sur la totalité du déplacement entre le point de départ et le point d'arrivée. Aussi, les projections dont on parle sont en fait des projections orthogonales. Les points de départ et d'arrivée définissent avec leur projection respective, c'est-à-dire avec leur point de projection respectif, un axe normal à la surface S.

On dépose ainsi un train de gouttes entre les deux bords B1 et B2. Ce train de gouttes comprend n gouttes, référencées G1 à Gn, parmi lesquelles G1 désigne la première goutte du train, c'est-à-dire la goutte déposée en premier par la buse 60 sur son trajet entre les deux bords B1 et B2, et Gn désigne la dernière goutte du train, c'est-à-dire la goutte déposée en dernier par la buse 60 sur son trajet entre les deux bords B1 et B2. Pour la notation, Gi désigne donc la i-ème goutte du train, i étant compris entre 1 et n.

Aussi, lors de l'étape c), l'espacement di entre les centres respectifs de deux gouttes successives du train de gouttes est ajusté par le contrôleur 68 en fonction de la longueur L1 du chemin entre les deux points de repère et de façon à ce que la dernière goutte Gn du train de gouttes est déposée de manière centrée sur le deuxième point de repère. Cela signifie que, une fois déposée, le centre géométrique de la dernière goutte est confondu avec le deuxième point de repère.

On parle d'un espacement plutôt que d'une distance pour bien faire ressortir que cet espacement peut correspondre à la longueur d'un arc.

Notamment, le chemin entre les deux points de repère mentionné ci-dessus présente en tout point un rayon de courbure identique à celui de la trajectoire T de la buse 60 entre le point de départ et le point d'arrivée. Autrement formulé, la trajectoire T de la buse est l'image du chemin entre les deux points de repère mentionné ci-dessus par une translation de vecteur, pour laquelle le vecteur est un vecteur normal en tout point du chemin et dont la norme correspond à la distance entre la buse 60 et la surface S, mesurée parallèlement à l'axe d'éjection de la buse.

De préférence, la première goutte du train de gouttes est centrée sur le premier point de repère. Cela signifie que, une fois déposée, le centre géométrique de la première goutte est confondu avec le premier point de repère.

Dans l'exemple des figures 3 à 7, le chemin entre les deux points de repère est rectiligne et la longueur du chemin correspond donc à la distance entre les deux points de repère. Toutefois, dans l'exemple de la figure 8, le chemin entre les deux points de repère est curviligne et la longueur du chemin correspond donc à la longueur de l'arc entre les deux points de repère.

Pour l'exemple, et en référence aux figures 3 et 4, on suppose que l'applicateur 6 commence par déposer le train de gouttes du haut et continue au fur et à mesure vers le bas. On définit un point de départ X'1 et un point d'arrivée X'2, dont les projections, selon l'axe de la buse, sur la surface S définissent deux points de repère X1 et X2 appartenant respectivement aux deux bords B1 et B2 de la surface à peindre S.

Dans le cas typique du deuxième train de gouttes (Voir figure 3), la distance entre les deux points de repère n'est pas un multiple de la distance inter-gouttes programmée par défaut, qui est dans l'exemple égale à la largeur d'une goutte une fois étalée. Aussi, si on considère que les gouttes sont déposées de façon jointive les unes à la suite des autres comme dans l'exemple de la figure 3, la dernière goutte Gn ne pourra pas être centrée sur le deuxième point de repère. Ici, elle est déposée bien après le deuxième point de repère. Cela a pour conséquence que le bord obtenu *in fine* n'est pas un bord franc, c'est-à-dire droit, mais au contraire très irrégulier. L'utilisation d'un cache (de protection) ne résoudrait pas le problème car certaines zones à proximité du bord B2 resteraient dénuées de peinture, comme c'est le cas pour le cinquième train de gouttes en partant du haut (Voir figure 3).

Ainsi, l'idée de l'invention est, comme illustré aux figures 4 à 7, de modifier la position d'une goutte au moins du train de gouttes de façon à ce que la dernière goutte du train soit déposée pile autour du deuxième point de repère. Pour cela, on prend en compte, avant de déposer un train de gouttes, la longueur L1 du chemin entre les deux points de repère X1 et X2 et la taille de chaque goutte une fois étalée, c'est-à-dire la largeur L. Ceci peut être réalisé de plusieurs façons comme détaillé ci-après.

On définit l'espacement (ou l'écartement) di comme l'espacement entre le centre de la goutte Gi et le centre de la goutte Gi+1. Cet espacement est mesuré parallèlement à la courbure du chemin entre les deux points de repère X1 et X2, laquelle est en pratique identique à celle de la trajectoire T de la buse entre le point de départ X'1 et le point d'arrivée X'2. Dans l'exemple où la trajectoire de la buse 60 est une ligne droite, l'espacement di est simplement la distance entre le centre de la goutte Gi et le centre de la goutte Gi+1. Ainsi, d1 désigne par exemple l'espacement, de centre à centre, entre les deux premières gouttes du train G1 et G2.

Selon une première forme d'exécution (illustrée à la figure 5), à l'étape c), la distance di entre les centres respectifs de chaque paire de deux gouttes successives du train de gouttes est ajustée en fonction de la distance L1 entre les deux points de repère X1 et X2 et de façon à ce que la dernière goutte Gn du train de gouttes est déposée de manière centrée sur le deuxième point de repère X2. Ainsi, dans cette première forme d'exécution, la distance di entre les centres respectifs de deux gouttes successives du train de gouttes est la même sur toute la longueur du train de gouttes, c'est-à-dire est la même quelle que soit la valeur de i.

Avantageusement, la distance di entre les centres respectifs de deux gouttes successives Gi et Gi+1 du train de gouttes est différente de, et notamment inférieure à, la largeur L d'une goutte une fois étalée.

Par exemple, si la distance L1 entre les deux points de repères est égale à 35 mm, alors la longueur L2 du train de gouttes devra être de 41 mm, pour une largeur de goutte L de 6 mm, étant donné que la première et la dernière goutte (G1 et Gn) sont respectivement centrées sur le premier et le deuxième point de repère X1 et X2, respectivement. 41 n'est pas un multiple de 6. Aussi, on va déposer huit gouttes avec à chaque fois un recouvrement entre deux gouttes de 1 mm. Au final, la longueur L2 du train de gouttes sera 8*6-7*1= 48-7 = 41 mm, soit pile ce qu'on veut.

Selon une autre forme de réalisation, illustrée à la figure 6, on modifie la distance entre deux gouttes seulement, respectivement Gi et Gi+1, du train de gouttes (i compris entre 1 et n-1). En particulier, on peut modifier la distance d1 entre les centres des deux premières gouttes G1 et G2 ou la distance dn-1 entre les centres des deux dernières gouttes Gn-1 et Gn du train. On peut aussi, comme dans l'illustration de la figure 6, modifier la distance entre deux gouttes au centre du train. Dans les trois cas, la distance di entre les centres respectifs de deux gouttes successives Gi et Gi+1 du train de gouttes n'est pas la même sur toute la longueur du train de gouttes, c'est-à-dire dépend de la valeur de i. Autrement formulé, dans cette forme d'exécution, au moins deux gouttes successives du train de gouttes sont espacées d'une distance di, mesurée de centre à centre, égale par défaut à la largeur L d'une goutte une fois étalée.

Par exemple, si on veut un train de gouttes d'une longueur L2 de 40 mm, pour une largeur de gouttes de 6 mm, alors on dépose 7 gouttes dont deux d'entre elles vont se chevaucher sur une largeur d'environ 2 mm. L'avantage de prendre des gouttes à distance des bords B1 et B2 est qu'il y a moins de risque de coulure. Aussi, on peut supposer qu'une surépaisseur au centre de la surface se verra moins que sur les bords.

Selon une autre forme d'exécution, illustrée à la figure 7, à l'étape c), on vient ajuster la distance entre les centres respectifs de plusieurs paires de deux gouttes successives du train de gouttes. Typiquement, lesdites paires de deux gouttes successives, pour lesquelles la distance de centre à centre est modifiée, sont espacées à intervalle régulier les unes des autres. Dans l'exemple de la figure 7, la distance, de centre à centre, entre deux gouttes successives est modifiée toutes les k gouttes, notamment toutes les deux gouttes. Précisément, dans l'exemple, le train de gouttes comporte 7 gouttes. La distance, mesurée de centre à centre, entre les gouttes G1 et G2, G3 et G4, G5 et G6 (d1, d3, d5) est inchangée, et correspond donc à la largeur L d'une goutte, tandis que la distance (d2, d4, d6), mesurée de centre à centre, entre les gouttes G2 et G3, G4 et G5, G6 et G7 est différente, et notamment plus faible.

En fait, le contrôleur 68 est par défaut programmé pour déposer les gouttes à une distance prédéfinie les unes à la suite des autres, et notamment de façon que la distance mesurée de centre à centre entre deux gouttes successives est égale à la largeur L d'une goutte une fois étalée. Aussi, le contrôleur 68 est capable de modifier (ou ajuster) la distance entre deux gouttes au moins du train de gouttes de façon à ce que la dernière goutte Gn soit déposée de manière centrée sur le deuxième point de repère X2.

Avantageusement, la distance entre les centres respectifs des deux gouttes est ajustée en modifiant la fréquence d'ouverture de la buse ou la vitesse de la buse lors de son déplacement à l'étape c). En effet, pour une vitesse de déplacement donnée, on peut modifier la fréquence d'ouverture de la buse, sur tout ou partie du train de gouttes, de façon que la dernière goutte se retrouve centrée sur le deuxième point de repère. A l'inverse, pour une certaine fréquence d'ouverture de la buse, on peut modifier la vitesse de déplacement de l'applicateur 6, sur tout ou partie du train de gouttes, de façon que la dernière goutte Gn se retrouve centrée sur le deuxième point de repère X2.

De préférence, le contrôleur du robot est donc capable de modifier la vitesse de déplacement de l'applicateur 6, et donc celle de la ou des buses, en fonction de la fréquence, qui est fixe, d'ouverture de la ou des buses et/ou de modifier la fréquence d'ouverture de la ou des buses en fonction de la vitesse de déplacement de la buse, de façon à adapter la longueur du train de gouttes en fonction de la longueur L1 du chemin entre les deux points de repère, et donc à déposer la dernière goutte Gn du train de gouttes de façon centrée sur le deuxième point de repère X2.

La figure 8 représente une variante d'exécution dans laquelle la surface S à revêtir est incurvée, et notamment bombée. Dans cet exemple, la longueur du chemin L1 entre les deux points de repère X1 et X2 est la longueur d'un arc. Aussi, la trajectoire T de la buse est incurvée de la même façon, c'est-à-dire que le rayon de courbure est le même. Egalement, l'espacement di correspond aussi à la longueur de l'arc entre le centre des gouttes Gi et Gi+1.

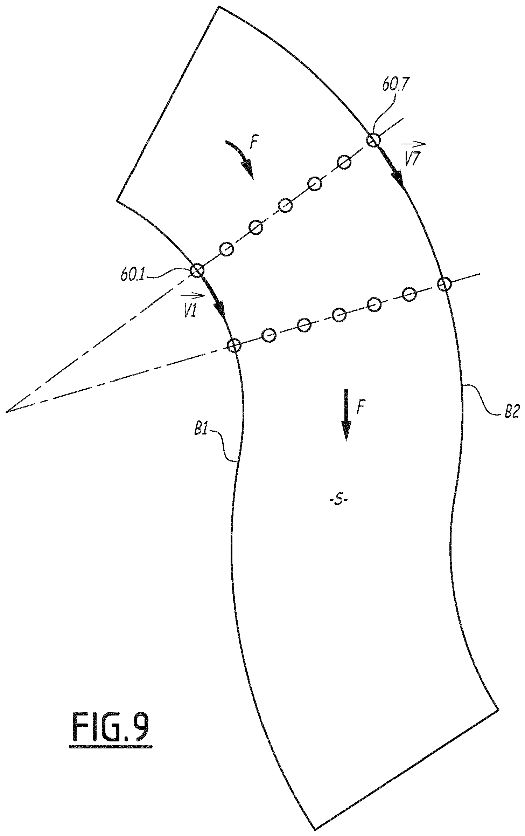

La figure 9 représente une variante d'exécution dans laquelle la surface S à revêtir est gauche, et impose au robot de décrire une trajectoire en trois dimensions, c'est-à-dire pas seulement dans un plan. Par exemple, si les buses suivent un contour (comme dans le FR3048368A1), chaque buse aura une longueur de trajectoire différente. Dans le cas d'une rotation autour de l'axe outil, la buse qui est à l'intérieur du « virage » décrira une trajectoire plus courte que celle de la buse située à l'extérieur du virage (ou de la courbe).

Typiquement, dans l'exemple de la figure 9, le robot applicateur comprend sept buses qui sont référencées 60.1 à 60.7 et qui sont alignées suivant un axe perpendiculaire au sens F de déplacement du robot. Sur la première partie de la trajectoire, la buse 60.1 est à l'intérieur du virage, tandis que la buse 60.7 est à l'extérieur du virage. Aussi, la vitesse effective v1 de la buse 60.1 est plus faible que la vitesse effective v7 de la buse 60.7. Par conséquent, et si l'on considère que l'application du produit de revêtement s'effectue selon la première forme d'exécution, où la distance inter-gouttes est identique sur toute la longueur du train de gouttes, la fréquence d'éjection des gouttes sera différente pour chacune des buses du robot, ce qui est logique car la longueur du chemin entre les deux points de repère est différente dans chaque cas. En pratique, la fréquence d'éjection des gouttes dépend donc de la vitesse effective de la buse, et donc indirectement de la position de la buse par rapport à la trajectoire du robot.

Les caractéristiques des variantes et des différentes formes d'exécution du procédé pourront être combinées entre elles de façon à générer de nouveaux modes de réalisation du procédé, tant que ces nouveaux modes de réalisation sont couverts par le jeu de revendication.

## Revendications

1. Procédé d'application d'un produit de revêtement, en particulier de peinture, suivant la technologie de goutte à la demande, dans lequel le produit de revêtement est déposé par un robot applicateur (2) comprenant un contrôleur (68) et au moins une buse (60.1-60.i ; 60) à ouverture séquentielle, commandée par le contrôleur, le procédé comprenant des étapes consistant à :
a) calculer dans un repère les coordonnées de plusieurs points situés sur le contour d'une surface à revêtir (S) ;
b) transmettre les coordonnées des points calculées à l'étape a) au contrôleur du robot (68); et
c) déplacer la buse (60.1-60.i ; 60) du robot applicateur entre un point de départ (X'1) et un point d'arrivée (X'2), dont les projections, selon l'axe d'éjection de la buse (X1-X'1 ; X2-X'2), sur la surface à revêtir définissent respectivement un premier point de repère (X1) et un deuxième point de repère (X2) appartenant respectivement à deux bords (B1, B2) de la surface à revêtir, afin de déposer un train de gouttes entre les deux bords ;
dans lequel, à l'étape c), l'espacement (di) entre les centres respectifs de deux gouttes successives (Gi, Gi+1) du train de gouttes est ajustée par le contrôleur (68) en fonction de la longueur (L1) du chemin entre les deux points de repère (X1, X2) et de façon à ce que la dernière goutte (Gn) du train de gouttes est déposée de manière centrée sur le deuxième point de repère (X2).

2. Procédé selon la revendication 1, dans lequel lesdites deux gouttes successives sont les deux premières gouttes (G1, G2) ou les deux dernières gouttes (Gn-1, Gn) du train de gouttes et donc dans lequel l'espacement (di) entre les centres respectifs de deux gouttes successives (Gi, Gi+1) du train de gouttes n'est pas le même sur toute la longueur du train de gouttes.

3. Procédé selon la revendication 1, dans lequel lesdites deux gouttes successives ne sont pas les deux premières gouttes (G1, G2) ou les deux dernières gouttes (Gn-1, Gn) du train de gouttes.

4. Procédé selon la revendication 1, dans lequel, à l'étape c), on ajuste l'espacement (di) entre les centres respectifs de plusieurs paires de deux gouttes successives (Gi, Gi+1) du train de gouttes et dans lequel lesdites paires de deux gouttes successives sont espacées à intervalle régulier les unes des autres.

5. Procédé selon l'une des revendications précédentes, dans lequel au moins deux gouttes successives du train de gouttes sont espacées d'une largeur (di), mesurée de centre à centre et parallèlement à la courbure dudit chemin, qui est par défaut inférieure ou égale à la largeur (L) d'une goutte une fois étalée.

6. Procédé selon la revendication 1, dans lequel, à l'étape c), on ajuste l'espacement (di) entre les centres respectifs de chaque paire de deux gouttes successives (Gi, Gi+1) du train de gouttes et donc dans lequel l'espacement (di) entre les centres respectifs de deux gouttes successives (Gi, Gi+1) du train de gouttes est sensiblement le même sur toute la longueur du train de gouttes.

7. Procédé selon l'une des revendications précédentes, dans lequel l'espacement (di) entre les centres respectifs des deux gouttes successives est ajusté en modifiant la fréquence d'ouverture de la buse (60.1-60.i ; 60) ou la vitesse de la buse lors de son déplacement à l'étape c).

8. Procédé selon la revendication 7, dans lequel l'espacement (di) entre les centres respectifs des deux gouttes successives est ajusté en modifiant en temps réel la fréquence d'ouverture de la buse (60.1-60.i ; 60) selon la vitesse et/ou la position effective de la buse.

9. Procédé selon l'une des revendications précédentes, dans lequel la première goutte (G1) du train de gouttes est centrée sur le premier point de repère (X1).

10. Procédé selon l'une des revendications précédentes, dans lequel l'ouverture et la fermeture de chaque buse (60.1-60.i ; 60) sont commandées électroniquement par des électrovalves (66.1-66.i).

11. Procédé selon l'une des revendications précédentes, dans lequel l'ouverture et la fermeture de chaque buse (60.1-60.i ; 60) sont commandées électroniquement par des actionneurs piézo-électriques.

12. Procédé selon l'une des revendications précédentes, dans lequel le robot comprend plusieurs buses et dans lequel l'ouverture et la fermeture de chaque buse (60.1-60.i ; 60) sont commandées électroniquement de façon indépendante pour chaque buse, de sorte que chaque buse peut avoir une fréquence d'éjection différente.

13. Procédé selon l'une des revendications précédentes, dans lequel le chemin entre les deux points de repère (X1, X2) présente en tout point un rayon de courbure identique à celui de la trajectoire (T) de la buse (60) entre le point de départ et le point d'arrivée.

14. Procédé selon l'une des revendications précédentes, dans lequel la buse (60) est orientée de telle façon que l'axe de projection (X1-X'1, X2-X'2) de la buse reste sensiblement perpendiculaire à la surface à revêtir (S) sur la totalité du déplacement entre le point de départ et le point d'arrivée.

15. Robot applicateur d'un produit de revêtement, en particulier de peinture, comprenant un contrôleur (68) et au moins une buse (60.1-60.i ; 60) à ouverture séquentielle, commandée par le contrôleur, le robot (2) étant configuré pour mettre en œuvre les étapes du procédé défini dans l'une des revendications précédentes.

16. Installation comprenant un ou plusieurs robots selon la revendication 15.

## Patentansprüche

1. Verfahren zum Auftragen eines Beschichtungsprodukts, insbesondere Farbe, gemäß der Drop-on-Demand-Technologie, wobei das Beschichtungsprodukt durch einen Applikationsroboter (2) aufgetragen wird, umfassend eine Steuerung (68) und mindestens eine Düse (60.1-60.i; 60) mit sequenzieller Öffnung, gesteuert durch die Steuerung, das Verfahren umfassend Schritte, die aus Folgenden bestehen:
a) Berechnen, in einem Koordinatensystem, der Koordinaten mehrerer Punkte, die sich auf der Kontur einer zu beschichtenden Fläche (S) befinden;
b) Übermitteln der Koordinaten der in Schritt a) berechneten Punkte an die Steuerung des Roboters (68); und
c) Bewegen der Düse (60.1-60.i; 60) des Applikationsroboters zwischen einem Anfangspunkt (X'1) und einem Endpunkt (X'2), deren Projektionen entlang der Ausstoßachse der Düse (X1-X'1; X2-X'2) auf die zu beschichtende Oberfläche jeweils einen ersten Bezugspunkt (X1) und einen zweiten Bezugspunkt (X2) definieren, die jeweils zu zwei Rändern (B1, B2) der zu beschichtenden Oberfläche gehören, um eine Reihe von Tropfen zwischen den zwei Rändern aufzubringen;
wobei in Schritt c) der Abstand (di) zwischen den jeweiligen Mitten von zwei aufeinanderfolgenden Tropfen (Gi, Gi+1) der Reihe von Tropfen von der Steuerung (68) abhängig von der Länge (L1) des Wegs zwischen den zwei Bezugspunkten (X1, X2) und auf eine Weise eingestellt wird, dass der letzte Tropfen (Gn) der Reihe von Tropfen zentriert auf dem zweiten Markierungspunkt (X2) aufgebracht wird.

2. Verfahren nach Anspruch 1, wobei die zwei aufeinanderfolgenden Tropfen die ersten zwei Tropfen (G1, G2) oder die letzten zwei Tropfen (Gn-1, Gn) der Reihe von Tropfen sind, und somit wobei der Abstand (di) zwischen den jeweiligen Mitten von zwei aufeinanderfolgenden Tropfen (Gi, Gi+1) der Reihe von Tropfen über die Länge der Reihe von Tropfen nicht gleich ist.

3. Verfahren nach Anspruch 1, wobei die zwei aufeinanderfolgenden Tropfen nicht die zwei ersten Tropfen (G1, G2) oder die zwei letzten Tropfen (Gn-1, Gn) der Reihe von Tropfen sind.

4. Verfahren nach Anspruch 1, wobei in Schritt c) der Abstand (di) zwischen den jeweiligen Mitten einer Vielzahl von aufeinanderfolgenden Paaren von zwei Tropfen (Gi, Gi+1) der Reihe von Tropfen eingestellt wird und wobei die Paare von zwei aufeinanderfolgenden Tropfen in regelmäßigen Intervallen voneinander beabstandet sind.

5. Verfahren nach einem der vorherigen Ansprüche, wobei dem mindestens zwei aufeinanderfolgende Tropfen der Reihe von Tropfen um eine Breite (di) voneinander beabstandet sind, gemessen von Mitte zu Mitte und parallel zu der Krümmung des Wegs, die standardmäßig kleiner als oder gleich wie die Breite (L) eines Tropfens in verteiltem Zustand ist.

6. Verfahren nach Anspruch 1, wobei in Schritt c) der Abstand (di) zwischen den jeweiligen Mitten von jedem Paar von zwei aufeinanderfolgenden Tropfen (Gi, Gi+1) der Reihe von Tropfen eingestellt wird und somit der Abstand (di) zwischen den jeweiligen Mitten von zwei aufeinanderfolgenden Tropfen (Gi, Gi+1) der Reihe von Tropfen im Wesentlichen über die Länge der Reihe von Tropfen gleich ist.

7. Verfahren nach einem der vorherigen Ansprüche, wobei der Abstand (di) zwischen den jeweiligen Mitten von zwei aufeinanderfolgenden Tropfen durch Ändern der Öffnungsfrequenz der Düse (60.1-60.i; 60) oder der Geschwindigkeit der Düse bei ihrer Verlagerung in Schritt c) eingestellt wird.

8. Verfahren nach Anspruch 7, wobei der Abstand (di) zwischen den jeweiligen Mitten der zwei aufeinanderfolgenden Tropfen eingestellt wird, indem die Öffnungsfrequenz der Düse (60.1-60.i; 60) abhängig von der Geschwindigkeit und/oder der tatsächlichen Position der Düse in Echtzeit geändert wird.

9. Verfahren nach einem der vorherigen Ansprüche, wobei der erste Tropfen (G1) der Reihe von Tropfen auf den ersten Bezugspunkt (X1) zentriert wird.

10. Verfahren nach einem der vorherigen Ansprüche, wobei das Öffnen und das Schließen von jeder Düse (60.1-60.i; 60) elektronisch durch Magnetventile (66.1-66.i) gesteuert wird.

11. Verfahren nach einem der vorherigen Ansprüche, wobei das Öffnen und das Schließen von jeder Düse (60.1-60.i; 60) elektronisch durch piezoelektrische Aktuatoren gesteuert wird.

12. Verfahren nach einem der vorherigen Ansprüche, wobei der Roboter eine Vielzahl von Düsen umfasst und wobei das Öffnen und das Schließen von jeder Düse (60.1-60.i; 60) für jede Düse unabhängig elektronisch gesteuert wird, sodass jede Düse eine unterschiedliche Ausstoßfrequenz aufweisen kann.

13. Verfahren nach einem der vorherigen Ansprüche, **dadurch gekennzeichnet, dass** der Weg zwischen den zwei Bezugspunkten (X1, X2) an jedem Punkt einen Krümmungsradius aufweist, der mit dem der Bahn (T) der Düse (60) zwischen dem Startpunkt und dem Endpunkt identisch ist.

14. Verfahren nach einem der vorherigen Ansprüche, wobei die Düse (60) ausgerichtet ist, sodass die Projektionsachse (X1-X'1, X2-X'2) der Düse über die gesamte Verlagerung zwischen dem Startpunkt und dem Endpunkt im Wesentlichen senkrecht zu der zu beschichtenden Oberfläche (S) bleibt.

15. Applikationsroboter eines Beschichtungsprodukts, insbesondere Farbe, umfassend eine Steuerung (68) und mindestens eine Düse (60.1-60.i; 60) mit sequenzieller Öffnung, gesteuert durch die Steuerung, wobei der Roboter (2) konfiguriert ist, um die Schritte des Verfahrens durchzuführen, die in einem der vorherigen Ansprüche definiert sind.

16. Anlage, umfassend einen oder mehreren Roboter nach Anspruch 15.

## Claims

1. A method for applying a coating product, in particular paint, using the drop on demand technology, in which the coating product is deposited by an applicator robot (2) comprising a controller (68) and at least one nozzle (60.1-60.i; 60) with sequential opening, commanded by the controller, the method comprising the following steps:
a) calculating, in a coordinate system, the coordinates of several points located on the contour of a surface to be coated (S);
b) sending the coordinates of the points calculated in step a) to the controller of the robot (68); and
c) moving the nozzle (60.1-60.i; 60) of the robot applicator between a starting point (X'1) and an arrival point (X'2), the projections of which, along the ejection axis of the nozzle (X1-X'1; X2-X'2), on the surface to be coated, respectively define a first reference point (X1) and a second reference point (X2) respectively belonging to two edges (B1, B2) of the surface to be coated, in order to deposit a series of drops between the two edges;
wherein in step c), the spacing (di) between the respective centers of two successive drops (Gi, Gi+1) of the series of drops is adjusted by the controller (68) as a function of the length (L1) of the journey between the two reference points (X1, X2) and such that the last drop (Gn) of the series of drops is deposited in a centered manner on the second reference point (X2).

2. The method according to claim 1, wherein said two successive drops are the first two drops (G1, G2) or the last two drops (Gn-1, Gn) of the series of drops, and therefore wherein the spacing (di) between the respective centers of two successive drops (Gi, Gi+1) of the series of drops is not the same over the entire length of the series of drops.

3. The method according to claim 1, wherein said two successive drops are not the first two drops (G1, G2) or the last two drops (Gn-1, Gn) of the series of drops.

4. The method according to claim 1, wherein, in step c), the spacing (di) between the respective centers of several pairs of two successive drops (Gi, Gi+1) of the series of drops is adjusted and wherein said pairs of two successive drops are spaced apart at regular intervals from one another.

5. The method according to one of the preceding claims, wherein at least two successive drops from the series of drops are spaced apart by a width (di), measured from center to center and parallel to the curvature of said journey, that is, by default, less than or equal to the width (L) of a drop once spread.

6. The method according to claim 1, wherein, in step c), the spacing (di) between the respective centers of each pair of two successive drops (Gi, Gi+1) of the series of drops is adjusted, and therefore wherein the spacing (di) between the respective centers of two successive drops (Gi, Gi+1) of the series of drops is substantially the same over the entire length of the series of drops.

7. The method according to one of the preceding claims, wherein the spacing (di) between the respective centers of the two successive drops is adjusted by modifying the opening frequency of the nozzle (60.1-60.i; 60) or the speed of the nozzle during its movement in step c).

8. The method according to claim 7, wherein the spacing (di) between the respective centers of the two successive drops is adjusted by modifying the opening frequency of the nozzle (60.1-60.i; 60) in real time based on the actual speed and/or position of the nozzle.

9. The method according to one of the preceding claims, wherein the first drop (G1) of the series of drops is centered on the first reference point (X1).

10. The method according to one of the preceding claims, wherein the opening and closing of each nozzle (60.1-60.i; 60) are commanded electronically by solenoid valves (66.1-66.i).

11. The method according to one of the preceding claims, wherein the opening and closing of each nozzle (60.1-60.i; 60) are commanded electronically by piezoelectric actuators.

12. The method according to one of the preceding claims, wherein the robot comprises several nozzles, and the opening and closing of each nozzle (60.1-60.i; 60) are commanded electronically, independently for each nozzle, such that each nozzle can have a different ejection frequency.

13. The method according to one of the preceding claims, wherein the journey between the two reference points (X1, X2) has, at all points, a curve radius identical to that of the path (T) of the nozzle (60) between the starting point and the arrival point.

14. The method according to one of the preceding claims, wherein the nozzle (60) is oriented such that the spray axis (X1-X'1, X2-X'2) of the nozzle remains substantially perpendicular to the surface to be coated (S) over all of the movement between the starting point and the arrival point.

15. An applicator robot for a coating product, in particular paint, comprising a controller (68) and at least a nozzle (60.1-60.i ; 60) with sequential opening, commanded by the controller (68), the robot (2) being configured to implement the steps of the method defined in one of the preceding claims.

16. An installation comprising one or several robots according to claim 15.
